# EUROPÄISCHE PATENTANMELDUNG

(11) **EP 1 531 260 A1**
(43) Veröffentlichungstag der Anmeldung: **18.05.2005**
(21) Anmeldenummer: 04021542.8
(22) Anmeldetag: 10.09.2004
(51) Int. Cl.: F02M 55/02, F16L 9/02

(54) **Mehrschichtiges metallisches Hochdruckleitungsrohr**

(30) Priorität: 12.11.2003 DE 20317565 U
(71) Anmelder: TI Automotive (Heidelberg) GmbH, 69123 Heidelberg (DE)
(72) Erfinder: Sausner, Andreas, Dipl.-Ing., 60389 Frankfurt (DE); Balbi, Paolo, 16030 Sori (GE) (IT); Picco, Pierluigi, 16036 Recco (GE) (IT)
(74) Vertreter: Rohmann, Michael, Dr.

(57) **Zusammenfassung**

Mehrschichtiges metallisches Hochdruckleitungsrohr für ein Hochdruckmedium, insbesondere für eine Einspritzanlage in Kraftfahrzeugen, wobei ein metallisches Innenrohr (1), zumindest eine metallische Zwischenschicht (2) und ein metallisches Außenrohr (3) vorgesehen sind. Diese metallischen Rohre (1,2,3) der Schichten sind lötverbindungsfrei miteinander verbunden. Zumindest ein Endverbindungselement (4) ist an einem Ende des Leitungsrohres angeschweißt.

## Beschreibung

Die Erfindung betrifft ein mehrschichtiges metallisches Hochdruckleitungsrohr für ein Hochdruckmedium, insbesondere für eine Einspritzanlage in Kraftfahrzeugen. - Hochdruckleitungsrohr für ein Hochdruckmedium meint eine Rohrleitung durch die ein fluides Medium mit hohem Druck, beispielsweise mit 1.000 bar oder mehr geführt wird. Einspritzanlage in Kraftfahrzeugen meint insbesondere eine Diesel-Einspritzanlage für Kraftfahrzeuge.

Mehrschichtige metallische Hochdruckleitungsrohre der vorstehend genannten Art sind aus der Praxis bekannt. Diese Hochdruckleitungsrohre bestehen aus mehreren Metallrohren bzw. aus mehreren metallischen Schichten, die koaxial ineinander gefügt sind. Bei den bekannten Rohren ist in der Regel ein Innenrohr aus einem kohlenstoffarmen Stahl, eine metallische Zwischenschicht, vorzugsweise ebenfalls aus Stahl und ein Außenrohr, bevorzugt ebenfalls aus Stahl vorgesehen. Die genannten Schichten dieser bekannten Rohre werden durch Verlöten miteinander verbunden und weisen nach einer Zinkbeschichtung eine Chrom VI oder Chrom III enthaltende Passivierungsschicht auf. Aufgrund dieser Verbindungstechnik sind diese Rohre nur für Drücke bis zu 1.300 bar geeignet. Insbesondere das Außenrohr der bekannten Hochdruckleitungsrohre lässt im Hinblick auf die Korrosionsbeständigkeit zu wünschen übrig. Es handelt sich um eine relativ schwache Außenschicht, die verhältnismäßig leicht beschädigt werden kann. Dadurch wird natürlich die langfristige Korrosionsbeständigkeit reduziert. Bei Manipulationen bzw. bei einer Bearbeitung der Rohre werden leicht Zinkteilchen abgetrennt, so dass es manchmal schwierig ist die Reinheitsanforderungen einzuhalten. Auch vom äußeren Erscheinungsbild lassen die bekannten Hochdruckleitungsrohre zu wünschen übrig, da die Oberfläche der Außenrohre schnell stumpf und uneben wird. Die bekannten Rohre werden in der Regel einer Autofrettage-Behandlung unterzogen um ihre Dauerfestigkeit gegenüber stoßweisen Drücken zu erhöhen. Aus diesem Grunde wird für das Innenrohr bevorzugt ein Stahl mit hoher Streckgrenze eingesetzt. Beim Verlöten erfährt dieses Material aber eine negative Beeinträchtigung, die die mechanischen Eigenschaften verschlechtert, was nachteilhaft für den Hochdruckeinsatz ist. Insgesamt bringt das Verbinden der Schichten durch Verlöten nachteilhafte mechanische Eigenschaften für die bekannten Rohre mit sich. Aufgrund der negativen Beeinträchtigung des Materials der Innenschicht ist eine Korrosion von innen möglich, insbesondere wenn aggressive Flüssigkeiten bzw. Kraftstoffe durch das Rohr geleitet werden.

Ein Hochdruckleitungsrohr wird an zumindest einem Ende mit Endverbindungselementen für den Anschluss des Leitungsrohres an andere Elemente der Hochdruckinstallation versehen. Ein Endverbindungselement besteht normalerweise aus einer umlaufenden Verdickung bzw. aus einem umlaufenden Flansch, der zum Halten bzw. Aufsetzen anderer Verbindungselemente, insbesondere einer Schraubenmutter dient. Das als umlaufende Verdickung bzw. als umlaufender Flansch ausgebildete Endverbindungselement wird bei den bekannten Hochdruckleitungsrohren durch Kaltverformen des Rohrwerkstoffes erzeugt. Diese Kaltverformung macht ein vorheriges Verlöten der Schichten erforderlich, welches Verlöten die oben bereits geschilderten Nachteile mit sich bringt. Durch das Kaltverformen des Leitungsrohres wird aber auch die Innenoberfläche des Rohres beeinträchtigt, so dass sich beim Durchleiten eines fluiden Mediums eine unerwünschte Erhöhung des Druckabfalls oder von Druckunregelmäßigkeiten ergibt. Außerdem können durch die Kaltverformung Dichtflächen an den Rohrenden bzw. im Verbindungsbereich beschädigt werden, wodurch Probleme (wie Leckagen) insbesondere bei hohen Drücken resultieren.

Demgegenüber liegt der Erfindung das technische Problem zugrunde, ein mehrschichtiges metallisches Hochdruckleitungsrohr der eingangs genannten Art anzugeben, mit dem die vorstehend beschriebenen Nachteile vermieden werden können, das insbesondere problemlos bei hohen Drücken eingesetzt werden kann und das dabei nichtsdestoweniger eine langfristige Korrosionsbeständigkeit und Abrasionsbeständigkeit aufweist.

Zur Lösung dieses technischen Problems lehrt die Erfindung ein mehrschichtiges metallisches Hochdruckleitungsrohr für ein Hochdruckmedium, insbesondere für eine Einspritzanlage in Kraftfahrzeugen,
wobei ein metallisches Innenrohr; zumindest eine metallische Zwischenschicht und ein metallisches Außenrohr vorgesehen sind,
wobei diese metallischen Rohre oder Schichten lötverbindungsfrei miteinander verbunden sind
und wobei zumindest ein Endverbindungselement an einem Ende des Leitungsrohres angeschweißt ist.

Dass die metallischen Rohre oder Schichten lötverbindungsfrei miteinander verbunden sind meint im Rahmen der Erfindung, dass die aneinander grenzenden Oberflächen dieser Rohre bzw. Schichten weder durch Löten noch durch Schweißen miteinander verbunden werden. Es liegt im Rahmen der Erfindung, dass die metallischen Rohre oder Schichten durch Aufeinanderpressen miteinander verbunden sind. Die Rohre oder Schichten werden also miteinander verpresst. Zweckmäßigerweise erfolgt die Verbindung durch Kaltverpressen der Rohre bzw. Schichten.

Es liegt im Rahmen der Erfindung, dass das metallische Außenrohr aus Stahl, vorzugsweise aus Edelstahl besteht. Nach sehr bevorzugter Ausführungsform der Erfindung ist das metallische Innenrohr ein Stahlrohr, bevorzugt ein Edelstahlrohr. Nach einer Ausführungsform kann ein nahtloses Stahlrohr bzw. Edelstahlrohr als Innenrohr eingesetzt werden. Nach einer anderen Ausführungsform wird als Innenrohr ein einfach gerolltes und auf Längsnaht verschweißtes Stahlrohr, vorzugsweise Edelstahlrohr verwendet.

Vorzugsweise besteht die metallische Zwischenschicht aus zumindest einem doppelwandigen Metallrohr. Nach einer besonderen Ausführungsform können für die Zwischenschicht zwei doppelwandige Metallrohre eingesetzt werden. Es handelt sich bei einem doppelwandigen Metallrohr zweckmäßigerweise um ein doppelt, d. h. zu 720° gerolltes Metallrohr. Die Zwischenschicht kann aber auch aus zumindest einem einwandigen Metallrohr bestehen oder aus zwei oder mehr einwandigen Metallrohren.

Es liegt im Rahmen der Erfindung, dass alle Schichten bzw. Rohre des erfindungsgemäßen Hochdruckleitungsrohres lötverbindungsfrei aneinander angeschlossen bzw. miteinander verbunden sind. Die Schichten oder Rohre werden zweckmäßigerweise im Rahmen eines Pressverfahrens bzw. Verpressverfahrens aufeinandergepresst werden. Ein erfindungsgemäßes Hochdruckleitungsrohr wird vorzugsweise so hergestellt, dass die verschiedenen Schichten bzw. Rohre koaxial ineinander gefügt werden und dann mit einem geeigneten Werkzeug verpresst werden bzw. kaltverpresst werden und zwar mit der Maßgabe, dass die einzelnen Schichten bzw. Rohre unmittelbaren Kontakt miteinander haben bzw. unmittelbar aneinander anliegen. Zweckmäßigerweise wird das Hochdruckleitungsrohr anschließend einer Autofrettage-Behandlung unterzogen.

Erfindungsgemäß ist zumindest ein Endverbindungselement an einem Ende des Leitungsrohres angeschweißt. Vorzugsweise ist jeweils zumindest ein Endverbindungselement an jedem Ende des Leitungsrohres angeschweißt. Bei dem Endverbindungselement handelt es sich bevorzugt um einen umlaufenden Endverbindungsflansch aus Stahl oder Edelstahl. Dieser Endverbindungsflansch dient insbesondere zum Halten einer Schraubenmutter, die dazu dient, das Hochdruckleitungsrohr mit anderen Elementen der Hochdruckinstallation zu verbinden. Nach sehr bevorzugter Ausführungsform der Erfindung wird das Endverbindungselement bzw. der Endverbindungsflansch durch Laserschweißen an dem Leitungsrohr angeschweißt. Diesem Laserschweißen des Endverbindungselementes kommt im Rahmen der Erfindung besondere Bedeutung zu. Der Erfindung liegt insoweit die Erkenntnis zugrunde, dass auf eine Kaltverformung der Enden des Leitungsrohres verzichtet werden kann.

Zweckmäßigerweise hat das Hochdruckleitungsrohr einen Außendurchmesser von 5 bis 10 mm, vorzugsweise von 5 bis 9 mm und einen Innendurchmesser von 1,5 bis 4,5 mm, vorzugsweise von 2 bis 3,5 mm. Der Außendurchmesser beträgt insbesondere 6 bis 8 mm und der Innendurchmesser des erfindungsgemäßen Hochdruckleitungsrohres beträgt insbesondere 2,3 bis 3 mm.

Nachfolgend wird eine bevorzugte Ausführungsform eines Herstellungsverfahrens für ein erfindungsgemäßes Hochdruckleitungsrohr beschrieben. Es wurde bereits oben dargelegt, dass die Schichten bzw. Rohre, die das Hochdruckleitungsrohr bilden sollen zunächst koaxial ineinandergesetzt werden. Zweckmäßigerweise schließt daran ein Verpressen bzw. Kaltverpressen der Schichten an, so dass die Schichten bzw. Rohre aneinandergepresst werden. Dazu wird mit einem geeigneten Werkzeug über den gesamten Umfang des Schichtenaggregates Druck radial nach innen ausgeübt. Wie vorstehend schon erwähnt wird ein Lötvorgang beim Verbinden der Schichten vermieden. Stattdessen kann zur Kontrolle der Streckgrenze anschließend eine thermische Behandlung erfolgen und daraufhin kann eine Feinbearbeitung der Innenbohrung stattfinden. Anschließend erfolgt zweckmäßigerweise ein Schneiden von Rohrabschnitten mit gewünschter Länge. Daran schließt sich vorzugsweise ein Bearbeiten bzw. Formen der Rohrenden, beispielsweise ein Schleifen dieser Rohrenden an. Vorzugsweise wird danach das Anschweißen der Endverbindungselemente bzw. der Endverbindungsflansche durchgeführt, wobei bevorzugt mit Laserverschweißung gearbeitet wird. Dann werden die Rohre bzw. Rohrabschnitte erforderlichenfalls gebogen. Vorzugsweise wird anschließend eine Autofrettage-Behandlung des Rohres durchgeführt. Letztendlich findet bevorzugt eine Reinigung des Rohres statt, wobei man zweckmäßigerweise ein wenig aggressives Fluid benutzt. Zusätzlich oder alternativ kann ein Polieren der Innenbohrung erfolgen.

Der Erfindung liegt die Erkenntnis zugrunde, dass ein erfindungsgemäßes Hochdruckleitungsrohr einerseits gegenüber relativ hohen Fluiddrücken beständig ist und sich andererseits durch eine hohe Korrosionsbeständigkeit und Abrasionsbeständigkeit auszeichnet. Das ganze Rohr mit samt den Rohrenden weist langfristig eine überraschend hohe Korrosionsbeständigkeit auf, und zwar sowohl innen als auch außen und insbesondere gegenüber aggressiven Medien. Das erfindungsgemäße Hochdruckleitungsrohr zeichnet sich durch eine hohe mechanische Widerstandsfähigkeit aus, und zwar insbesondere auch das Außenrohr. Das Außenrohr ist im Vergleich zu den aus dem Stand der Technik bekannten Außenrohren beständiger gegenüber Schlägen und Stößen und weniger anfällig für Kratzer und Risse. Aufgrund des Verzichts auf Lötmaßnahmen kann ein Innenrohr mit hoher Streckgrenze eingesetzt werden. Damit werden insbesondere nach einer Autofrettage-Behandlung ausgezeichnete Eigenschaften, vor allem ausgezeichnete mechanische Eigenschaften erhalten. Auch die Tatsache das die Rohrenden mit einem angeschweißten Endverbindungselement versehen werden, macht die Rohrenden und auch das ganze Rohr mechanisch sehr widerstandsfähig. Aufgrund des Verzichts auf eine Kaltverformung der Rohrenden werden im Vergleich zu den aus dem Stand der Technik bekannten Rohren keine Micro-Risse gebildet, die die Druckbeständigkeit vermindern könnten. Hervorzuheben ist auch, dass das erfindungsgemäße Hochdruckleitungsrohr von unerwünschtem Chrom VI freigehalten werden kann. Mit dem erfindungsgemäßen Hochdruckleitungsrohr sind auch die Reinheitsanforderungen besser einzuhalten. Gegenüber den aus dem Stand der Technik bekannten Rohren entstehen keine unerwünschten Zinkteilchen mehr bei Manipulationen, Montage, Demontage oder Bearbeitung. Aufgrund des erfindungsgemäßen Einsatzes eines Außenrohres aus Edelstahl ist es zudem möglich, das Hochdruckleitungsrohr mit aggressiveren Waschflüssigkeiten effektiv zu reinigen. Bei den aus dem Stand der Technik bekannten Rohren war dies nicht möglich. Im Verbindungsbereich des erfindungsgemäßen Hochdruckleitungsrohres ist eine überraschend gute Abdichtung möglich und die entsprechenden Dichtflächen zeichnen sich durch eine hohe Qualität aus, wobei zu berücksichtigen ist, dass der Dichtbereich nicht durch Kaltverformung erhalten wird sondern durch Feinbearbeitung und dadurch konsistenter ist. Zu ergänzen ist noch, dass ein erfindungsgemäßes Hochdruckleitungsrohr sich durch hervorragendes ästhetisches äußeres Erscheinungsbild auszeichnet.

Nachfolgend wird die Erfindung anhand einer lediglich ein Ausführungsbeispiel darstellenden Zeichnung näher erläutert. Es zeigen in schematischer Darstellung:
- **Fig. 1**: Einen Längsschnitt durch einen Teil eines erfindungsgemäßen Hochdruckleitungsrohres im Zuge der Herstellung (Kaltverpressen der Schichten),
- **Fig. 2**: einen Querschnitt durch ein erfindungsgemäßes Hochdruckleitungsrohr,
- **Fig. 3**: den Gegenstand gemäß Fig. 2 in einer anderen Ausführungsform,
- **Fig.4**: einen Längsschnitt durch einen Teil eines erfindungsgemäßen Hochdruckleitungsrohres und
- **Fig. 5**: eine perspektivische Ansicht eines erfindungsgemäßen Hochdruckleitungsrohres.

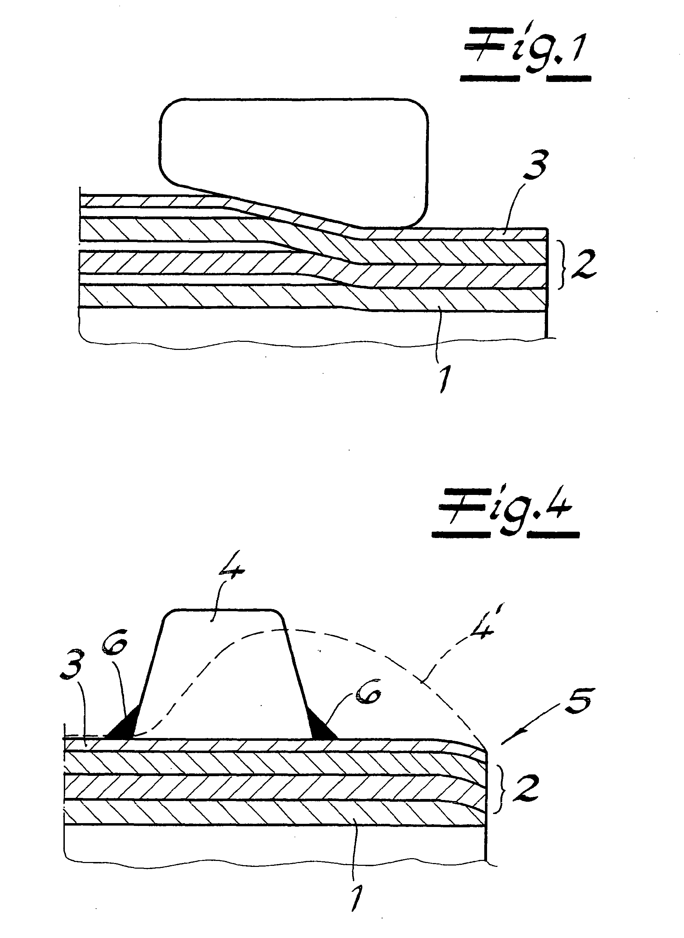

Die Figuren zeigen ein erfindungsgemäßes mehrschichtiges metallisches Hochdruckleitungsrohr für ein Hochdruckmedium, insbesondere für eine Einspritzanlage in Kraftfahrzeugen. Das Hochdruckleitungsrohr weist ein metallisches Innenrohr 1 auf, das vorzugsweise und im Ausführungsbeispiel als nahtloses Edelstahlrohr ausgebildet ist. Fernerhin ist eine metallische Zwischenschicht 2 (oder Zwischenschichten 2) vorgesehen. Daran schließt ein metallisches Außenrohr 3 aus Edelstahl an. Innenrohr 1, Zwischenschicht 2 (oder Zwischenschichten 2) und Außenrohr 3 werden lötverbindungsfrei aneinander angeschlossen. Zunächst werden die drei Elemente koaxial ineinander gefügt und dann verpresst. Der Vorgang des Verpressens ist in der Fig. 1 dargestellt.

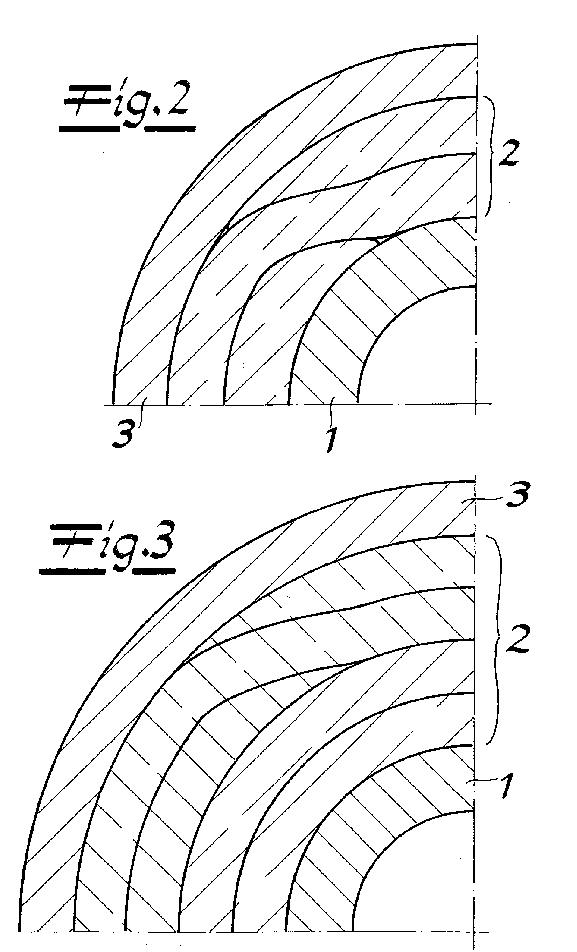

In der in Fig. 1 dargestellten Ausführungsform besteht die metallische Zwischenschicht 2 aus zwei metallischen Rohren (zwei doppelwandige Rohre oder zwei einwandige Rohre). Im Ausführungsbeispiel nach Fig. 2 ist die metallische Zwischenschicht 2 als doppelwandiges Metallrohr ausgebildet. Im Ausführungsbeispiel nach Fig. 3 besteht die metallische Zwischenschicht 2 aus zwei doppelwandigen Metallrohren.

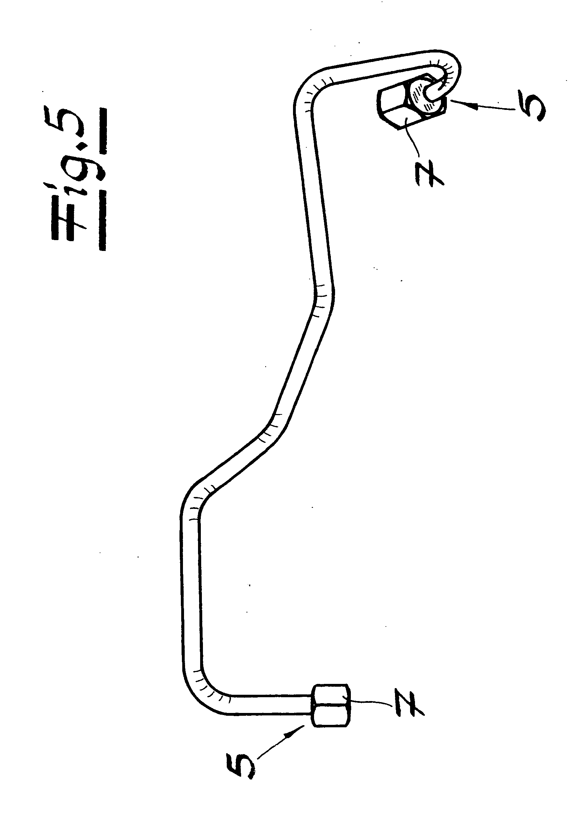

In der Fig. 4 ist ein an einem Ende 5 des Leitungsrohres angeschweißtes Endverbindungselement 4 dargestellt, das vorzugsweise durch Laserschweißen angeschweißt wurde. Man erkennt die entsprechenden Laserschweißbereiche 6. Bei dem Endverbindungselement 4 handelt es sich um einen über den Umfang des Hochdruckleitungsrohres umlaufenden Endverbindungsflansch. Dieser Endverbindungsflansch dient zum Halten einer Schraubenmutter für die Verbindung des Endes 5 des Rohres mit weiteren Elementen der Hochdruckinstallation. In der Fig. 4 ist im Übrigen gestrichelt ein nach dem Stand der Technik hergestelltes Endverbindungselement 4' dargestellt. Dieses Endverbindungselement 4' wurde im Rahmen der aus dem Stand der Technik bekannten Maßnahmen durch Kaltverformen hergestellt.

Die Fig. 5 zeigt eine perspektivische Gesamtansicht eines Hochdruckleitungsrohres, das mit entsprechenden Biegungen versehen wurde. An den beiden Enden 5 des Hochdruckleitungsrohres sind Schraubenmuttern 7 angeschlossen.

## Patentansprüche

1. Mehrschichtiges metallisches Hochdruckleitungsrohr für ein Hochdruckmedium, insbesondere für eine Einspritzanlage in Kraftfahrzeugen,
wobei ein metallisches Innenrohr (1), zumindest eine metallische Zwischenschicht (2) und ein metallisches Außenrohr (3) vorgesehen sind,
wobei diese metallischen Rohre oder Schichten lötverbindungsfrei miteinander verbunden sind
und wobei zumindest ein Endverbindungselement (4) an einem Ende (5) des Leitungsrohres angeschweißt ist.

2. Hochdruckleitungsrohr nach Anspruch 1, wobei die metallischen Rohre oder Schichten durch Aufeinanderpressen miteinander verbunden sind.

3. Hochdruckleitungsrohr nach Anspruch 2, wobei die metallischen Rohre oder Schichten durch Kaltverpressen miteinander verbunden sind.

4. Hochdruckleitungsrohr nach einem der Ansprüche 1 bis 3, wobei das metallische Außenrohr (3) aus Stahl, vorzugsweise aus Edelstahl besteht.

5. Hochdruckleitungsrohr nach einem der Ansprüche 1 bis 4, wobei das metallische Innenrohr (1) ein Stahlrohr, vorzugsweise ein Edelstahlrohr ist.

6. Hochdruckleitungsrohr nach einem der Ansprüche 1 bis 5, wobei das Endverbindungselement (4) durch Laserschweißen angeschweißt ist.

7. Hochdruckleitungsrohr nach einem der Ansprüche 1 bis 6, wobei das Rohr einen Außendurchmesser von 5 bis 10 mm, vorzugsweise von 5 bis 9 mm aufweist und einen Innendurchmesser von 1,5 bis 4,5 mm, vorzugsweise von 2 bis 3,5 mm aufweist.

8. Hochdruckleitungsrohr nach einem der Ansprüche 1 bis 7, wobei das Rohr einer Autofrettage-Behandlung unterzogen wurde.
